Europäisches Patentamt

European Patent Office

Office européen des brevets

(11) Publication number: **0 485 029 A1**

## EUROPEAN PATENT APPLICATION

(21) Application number: **91202832.1**

(22) Date of filing: **31.10.91**

(51) Int. Cl.5: **G06K 7/10**, G06K 7/14, G06K 9/18

(30) Priority: **06.11.90 NL 9002414**

(43) Date of publication of application:
**13.05.92 Bulletin 92/20**

(84) Designated Contracting States:
**DE FR GB**

(71) Applicant: **OPTICON SENSORS EUROPE B.V.**
**Kruisweg 825**
**NL-2132 NG Hoofddorp(NL)**

(72) Inventor: **Peng, Ke-Ou**
**Kruisweg 825**
**NL-2132 NG Hoofddorp(NL)**

(74) Representative: **Kooy, Leendert Willem et al**
**OCTROOIBUREAU VRIESENDORP & GAADE**
**P.O. Box 266**
**NL-2501 AW The Hague(NL)**

(54) **Optical bar code reader device.**

(57) Optical bar code reader device for projecting a scanning beam of light along a projection axis onto a bar code and for subsequently detecting light reflected by the bar code, said reader device comprising a housing having an aperture for passing light, said housing comprising:
- a light source (1) for transmitting the scanning beam of light to a rotatable, first optical reflection means (4);
- second optical reflection means (A,B,C) that are provided along at least a part of an edge of the light-passing aperture and are adapted to reflect the scanning beam of light from the first reflecting means (4) through the light-passing aperture to the bar code;
- receiving means for receiving the light reflected by the bar code;
- detecting means for generating electro-magnetic signals, representing information comprised in the bar code, in response to the receiving of the reflection beam of light reflected by the bar code;
wherein the reader device is so arranged that the scanning beam of light can be projected in at least two planes of scanning (16,17,18) according to a starlike pattern.

FIG. 1

The invention relates to an optical bar code reader device for projecting a scanning beam of light along a projection axis onto a bar code and for subsequently detecting light reflected by the bar code, said reading device comprising a housing having an aperture for passing light, said housing comprising:

- a light source for transmitting the scanning beam of light to a rotatable, first optical reflection means;
- second optical reflection means that are provided along at least a part of an edge of the light-passing aperture and are adapted to reflect the scanning beam of light from the first reflection means through the light-passing aperture to the bar code;
- receiving means for receiving the light reflected by the bar code;
- detecting means for generating electro-magnetic signals, representing information comprised in the bar code, in response to the receiving of the light reflected by the bar code.

It is noted that the projection axis is in fact the axis along which the bar code is exposed to the scanning beam of light.

Reader devices for generating a plurality of, and particularly non-parallel, scanning lines to read a bar code are usually of a relatively complex design. Furthermore, reader devices comprising rotating and fixed mirrors have the disavantage of being merely capable of generating a suitable pattern of scanning lines in only one plane of scanning, for example, when they are used for reading bar codes on commodities.

Beyond this plane of scanning the pattern of scanning lines will change to such an extent that, exceeding a certain margin, it is no longer possible to read a randomly orientated bar code in any orientation of the plane of scanning.

The object of the invention is to provide an optical bar code reader device suited for reading a bar code with an optimum effect, under all conditions.

To this end, the reader device of the type as mentioned in the preamble is characterized in that it is so adapted that the scanning beam of light can be projected in at least two planes of scanning according to a suitable pattern; preferably, a starlike pattern.

In one embodiment of the invention, the reader device is characterized in that the first reflection means comprises n (n = 2,3,4,etc.) reflection surfaces that are mutually orientated at different angles with respect to the projection axis, and in that each reflection surface of said first reflection means corresponds to a separate group of second reflection means.

In another embodiment of the invention, the reader device is characterized in that within one group of second reflection means at least two of said second reflection means are orientated at different angles with respect to the projection axis.

In an additional embodiment of the invention the reader device is characterized in that at least two of the second reflection means are orientated at different angles with respect to the projection axis.

The invention will be illustrated in detail with drawing figures, wherein:

figure 1 shows a schematic view of an embodiment of an optical bar code reader device in accordance with the invention, and

figure 2 schematically illustrates another embodiment of an optical bar code reader device in accordance with the invention.

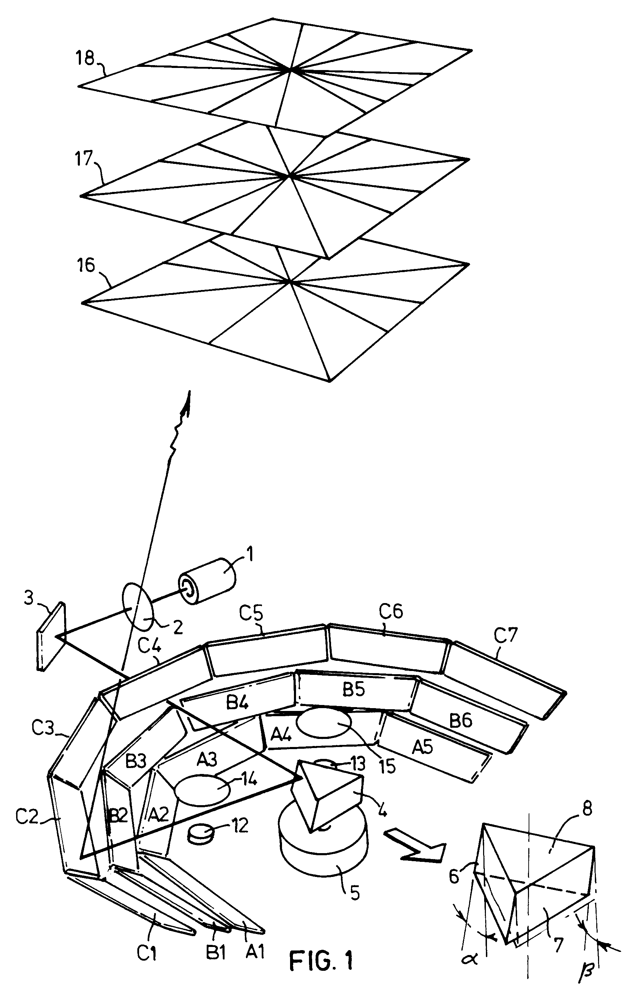

As can be seen in figure 1, a light source formed by a laser diode 1 transmitting a scanning beam of light through a focussing lens arrangement 2 and a mirror 3 to a rotatable, first optical reflection means (mirror) 4. This first optical reflection mirror 4, the rotatability of which is effected by means of a motor 5, comprises three reflection surfaces 6, 7, 8, as is shown in figure 1 as a larger-scale drawing, following the arrow. The particular drawing clearly demonstrates that the three reflection surfaces 6, 7, 8 are orientated at different angles (angles $\alpha$ and $\beta$, pertaining to the reflection surfaces 6 and 7, respectively) with respect to the projection axis indicated by a dashed line.

Each reflection surface 6, 7, 8 of the first reflection mirror 4 corresponds to a separate group A, B, C of second optical reflection means (mirrors) A1-A5, B1-B6, C1-C7. As is shown in figure 1, all the second reflection mirrors A1-A5, B1-B6, C1-C7 are arranged along at least a part of an edge of a light-passing aperture of the reader device.

The light from the laser diode 1 that is reflected by the reflection surfaces 6, 7, 8 is reflected again to a bar code (not illustrated) through the second reflection mirrors A1-A5, B1-B6, C1-C7, respectively. In this way, each group A, B, C of second reflection mirrors A1-A5, B1-B6, C1-C7 contributes to the projecting of the scanning beam of light in a plane of scanning according to a starlike pattern, so that three planes of scanning 16, 17, 18 are formed.

The light reflected by the bar code is received by the lenses 14, 15 and subsequently focussed onto detecting means formed by photodiodes 12, 13. Those photodiodes 12, 13 generate electromagnetic signals representing the information contained in the bar code.

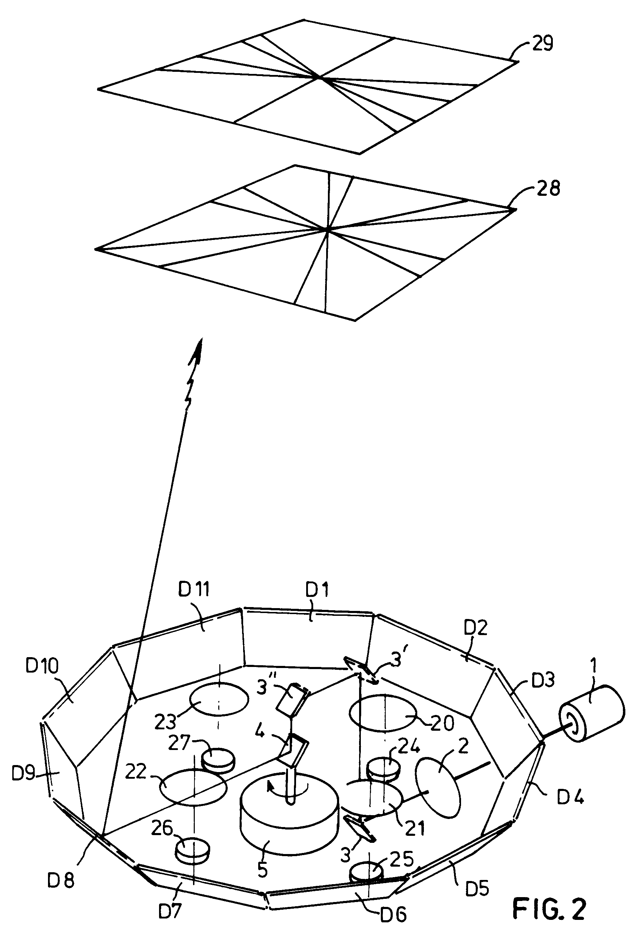

According to the other embodiment, as is illustrated in figure 2, a laser diode 1 transmitting a scanning beam of light through a focussing lens arrangement 2 and mirrors 3, 3', 3'' to a first optical reflection mirror 4 having one reflection surface. In this case too the reflection mirror 4 is rotatable by means of a motor 5.

Also second optical reflection mirrors D1-D11 are arranged along at least a part of an edge of a light-passing aperture of the reader device, said second optical reflection mirrors reflecting the laser diode light from the first reflection mirror 4 through the light-passing aperture.

As the second reflection mirrors D1, D3, D5, D7, D9, D11 are orientated differently from the second reflection mirrors D2, D4, D6, D8, D10, with respect to the projection axis, the scanning beam of light transmitted by the laser diode 1 is projected in two planes of scanning 28, 29 according to a starlike pattern.

Moreover, lenses 20, 21, 22, 23 constitute receiving means for receiving the light reflected by a bar code, whereas photodiodes 24, 25, 26, 27 serve as detecting means.

**Claims**

1. Optical bar code reader device for projecting a scanning beam of light along a projection axis onto a bar code and for subsequently detecting light reflected by the bar code, said reader device comprising a housing having an aperture for passing light, said housing comprising:
   - a light source for transmitting the scanning beam of light to a rotatable, first optical reflection means;
   - second optical reflection means that are provided along at least a part of an edge of the light-passing aperture and are adapted to reflect the scanning beam of light from the first reflection means through the light-passing aperture to the bar code;
   - receiving means for receiving the light reflected by the bar code;
   - detecting means for generating electromagnetic signals, representing information comprised in the bar code, in response to the receiving of the light reflected by the bar code;
   **characterized in that** the reader device is so adapted that the scanning beam of light can be projected in at least two planes of scanning according to a suitable pattern.

2. Optical bar code reader device according to claim 1, **characterized in that** said first reflection means comprises n (n = 2,3,4, etc.) reflection surfaces that are mutually orientated at different angles with respect to the projection axis, and in that each reflection surface of said first reflection means corresponds to a separate group of second reflection means.

3. Optical bar code reader device according to claim 2, **characterized in that,** within one group of second reflecting means, at least two of said second reflecting means are orientated at different angles with respect to the projection axis.

4. Optical bar code reader device according to claim 1, wherein the first reflection means comprises one reflection surface, **characterized in that** at least two of the second reflection means are orientated at different angles with respect to the projection axis.

FIG. 1

FIG. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4 699 447 (HOWARD) 13 October 1987<br>* abstract; figure 1 *<br>* column 3, line 26 - column 4, line 15 * | 1,4 | G06K7/10<br>G06K7/14<br>G06K9/18 |
| Y | | 2,3 | |
| Y | US-A-4 939 356 (RANDO ET AL.) 3 July 1990<br>* column 9, line 29 - line 46; figure 13 * | 2,3 | |
| A | EP-A-0 319 237 (TOKYO ELECTRIC CO. LTD) 7 June 1989<br>* abstract *<br>* figures 24-26 * | 1-4 | |

TECHNICAL FIELDS SEARCHED (Int. Cl.5)

G06K

The present search report has been drawn up for all claims

| Place of search | Date of completion of the search | Examiner |
|---|---|---|
| THE HAGUE | 23 JANUARY 1992 | GOOSSENS A.M.J. |

EPO FORM 1503 03.82 (P0401)